# EUROPÄISCHE PATENTANMELDUNG

(11) **EP 2 189 862 A1**
(43) Veröffentlichungstag der Anmeldung: **26.05.2010**
(21) Anmeldenummer: 08020210.4
(22) Anmeldetag: 20.11.2008
(51) Int. Cl.: G05B 23/02

(54) **Verfahren zum Betrieb eines Automatisierungsgerätes, nach dem Verfahren arbeitendes Automatisierungsgerät und Automatisierungssystem mit einem solchen Gerät**

(71) Anmelder: Siemens Aktiengesellschaft, 80333 München (DE)
(72) Erfinder: Gebert, Dirk, 90475 Nürnberg (DE); Ohlmann, Joachim, 91074 Herzogenaurach (DE)

(57) **Zusammenfassung**

Es werden ein Verfahren zum Betrieb eines als eingebettet ausgeführten Automatisierungsgerätes mit einem Speicher (18) und einem darin zur Implementierung einer Automatisierungslösung vorgehaltenen Steuerungsprogramm (20), welches Protokolldaten (22) generiert oder empfängt, und ein nach dem Verfahren arbeitendes Automatisierungsgerät (12) angegeben, bei dem im Speicher (18) eine Metaformat-Vorlage (24) vorgehalten wird, bei dem im Betrieb einzelne Protokolldaten (22) in ein aus der Metaformat-Vorlage (24) gewonnenes Metaformat-Dokument (26) eingetragen werden und bei dem das um Protokolldaten (22) ergänzte Metaformat-Dokument (26) an eine externe Ausgabeeinheit (28), z. B. einen metaformatfähigen Drucker, weitergeleitet wird, so dass auf Seiten des Automatisierungsgerätes (12) z. B. kein Druckertreiber erforderlich ist und auf Seiten des Automatisierungsgerätes (12) keine Ressourcen für die Formatierung und Umsetzung in Steuerungsanweisungen für die Ausgabeeinheit (28) benötigt werden.

## Beschreibung

Die Erfindung betrifft ein Verfahren zum Betrieb eines als eingebettet ausgeführten Automatisierungsgerätes. Die eingeführte Bezeichnung für derartige Geräte lautet "Embedded Device", worauf im Folgenden mit der deutschen Übersetzung als "eingebettet" Bezug genommen wird. Ein als eingebettet ausgeführtes Gerät ist ein Gerät, das in einen technischen Kontext eingebunden (eingebettet) ist. Dabei hat es die Aufgabe, das System, in das es eingebettet ist, zu steuern, zu regeln oder zu überwachen. Soweit es sich bei dem Gerät um ein Automatisierungsgerät handelt, wie dies hier bei der Erfindung im Vordergrund steht, bezieht sich die Einbettung auf einen zu steuernden oder zu überwachenden technischen Prozess oder einen davon umfassten Teilprozess, z. B. eine Dosier- und Wiegeeinrichtung.

Allgemein ist der Begriff "Automatisierungsgerät" für den Gesamtzusammenhang dieser Beschreibung so auszulegen, dass er sämtliche Geräte, Einrichtungen oder Systeme umfasst, also neben z. B. Steuerungen, wie speicherprogrammierbaren Steuerungen, Prozessrechnern, (Industrie-)Computern und dergleichen auch Antriebssteuerungen, Frequenzumrichter, Visualisierungsgeräte und Ähnliches, wie sie zur Steuerung, Regelung und/oder Überwachung technischer Prozesse z. B: zum Umformen oder Transportieren von Material, Energie oder Information etc. eingesetzt werden oder einsetzbar sind, wobei insbesondere über geeignete technische Einrichtungen, wie z. B. Sensoren oder Aktoren, Energie aufgewandt oder gewandelt wird.

Eingebettete Geräte sind normalerweise speziell an eine jeweilige Aufgabe angepasst, so dass aus Kostengründen eine optimierte Hard- und Software gewählt wird. Bei eingebetteten Automatisierungsgeräten gibt es häufig den Bedarf, Inhalte, z. B. Protokolldaten und dergleichen, über einen lokal oder per Netzwerkschnittstelle angebundenen Drucker auszudrucken. Ähnlich wie bei PC-basierten Systemen ist auch bei eingebetteten Geräten eine spezifische Unterstützung für das jeweilige Druckermodell erforderlich. Aufgrund der Vielzahl unterschiedlicher eingebetteter Geräte sind jedoch kaum so genannte Druckertreiber verfügbar. Daher war bislang für den Hersteller oder Anwender eingebetteter Automatisierungsgeräte eine eigene Entwicklung der jeweiligen Druckertreiber erforderlich, was jedoch aufgrund der Vielzahl unterschiedlicher Druckerhersteller und -modelle sehr aufwändig ist. Zusätzlich ist eine permanente Neu- und Weiterentwicklung der Druckertreiber erforderlich, um trotz der im Vergleich zu eingebetteten Automatisierungsgeräten sehr kurzen Produktlebenszyklen einzelner Druckermodelle eine ausreichende Druckerunterstützung ermöglichen zu können. Dies erhöht den Aufwand zur Realisierung einer Druckfunktion bei eingebetteten Automatisierungsgeräten nochmals deutlich. Als weiteres Problem ergibt sich, dass sich wegen der oftmals limitierten Ressourcen in Bezug auf Hardware, Software, Rechenkapazität, Speicherplatz usw., mit eingebetteten Automatisierungsgeräten kaum komplexe Drucklayouts realisieren lassen.

Bisher hat man versucht, die oben skizzierte Problematik dadurch anzugehen, dass für einzelne eingebettete Automatisierungsgeräte druckerspezifische Treiber für eine kleine Auswahl an Druckern entwickelt werden. Dazu werden auf einem Basis-Druckertreiber aufbauend druckerspezifische Eigenschaften implementiert. Das bedeutet jedoch, dass jeder Druckertreiber nicht nur entwickelt, sondern auch gerätegranular getestet und freigegeben werden muss. Nachteile bei diesem allenfalls ansatzweise als Lösung des oben skizzierten Problems bezeichenbaren Ansatz ist jedoch die geringe Marktabdeckung, da aufgrund der gerätespezifischen Druckertreiber nur eine kleine Auswahl der auf dem Markt verfügbaren Drucker unterstützt werden kann. Weiterhin erfordern die ständig neu auf den Markt kommenden Drucker einen hohen Entwicklungsaufwand durch eine kontinuierliche Nachpflege auch für ältere, aber immer noch im Betrieb befindliche, eingebettete Geräte.

Eine Aufgabe der vorliegenden Erfindung besteht entsprechend darin, ein Verfahren zum Betrieb eines eingebetteten Automatisierungsgeräts und ein nach dem Verfahren arbeitendes Automatisierungsgerät anzugeben, mit dem die o. g. Nachteile vermieden, zumindest hinsichtlich ihrer Auswirkungen reduziert werden.

Diese Aufgabe wird für das Betriebsverfahren erfindungsgemäß mit den Merkmalen des Anspruchs 1 gelöst. Dazu ist bei einem Verfahren zum Betrieb eines als eingebettet (embedded) ausgeführten Automatisierungsgeräts mit einem Speicher und einem darin zur Implementierung einer Automatisierungslösung vorgehaltenen Steuerungsprogramm, welches Protokolldaten generiert oder empfängt, vorgesehen, dass im Speicher eine Metaformat-Vorlage vorgehalten wird, dass im Betrieb einzelne Protokolldaten in ein aus der Metaformat-Vorlage gewonnenes Metaformat-Dokument eingetragen werden und dass das um Protokolldaten ergänzte Metaformat-Dokument an eine externe Ausgabeeinheit weitergeleitet wird.

Der Vorteil der Erfindung besteht in der Verwendung eines druckerunabhängigen Metaformats und Erzeugung eines darauf basierenden Metaformat-Dokuments zum Ausdrucken durch das als eingebettet ausgeführte Automatisierungsgerät, im Folgenden kurz nur als Automatisierungsgerät bezeichnet. Im Speicher des Automatisierungsgeräts wird eine Metaformat-Vorlage vorgehalten, die auf dem Automatisierungsgerät oder extern erzeugt sein kann. Im Betrieb wird aus der Metaformat-Vorlage ein Metaformat-Dokument generiert, das in an sich bekannter Art und Weise die von der Metaformat-Vorlage bereits umfassten Spezifikationen, z. B. Formatierungen usw., übernimmt. In dieses Metaformat-Dokument werden einzelne Protokolldaten eingetragen, wobei Protokolldaten hier und im Folgenden als Oberbegriff für sämtliche Daten und Arten von Daten, die mit dem Automatisierungsgerät ausgegeben werden, z. B. auch Status- oder Fehlermeldungen usw., gemeint ist. Das um Protokolldaten ergänzte Metaformat-Dokument kann dann an eine externe Ausgabeeinheit weitergeleitet werden, und das Automatisierungsgerät wird im Zusammenhang mit der Ausgabe der Protokolldaten nur insoweit "belastet", als auf Seiten des Automatisierungsgerätes ein Eintragen der Protokolldaten in das Metaformat-Dokument erforderlich ist. Auf dem Automatisierungsgerät wird weder ein Druckertreiber benötigt noch werden auf dem Automatisierungsgerät Ressourcen verwendet, um etwa eine Formatierung der Ausgabe zu erreichen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass die Ausgabeeinheit ein Metaformat-fähiger Drucker ist. Darüber hinaus kommt als Ausgabeeinheit eine Anzeigeeinrichtung nach Art eines Bildschirms in Betracht. Metaformat-fähige Drucker sind z. B. Drucker, die so genannte Seitenbeschreibungssprachen, wie sie z. B. unter der Marke Postscript bekannt sind, direkt interpretieren und in Befehle zur Ansteuerung der jeweiligen Druckfunktionalität umsetzen können. Seitenbeschreibungssprachen der zuvor erwähnten Art sind also ein Beispiel für ein Metaformat. Andere Beispiele für Metaformate, die zumindest auch die Möglichkeit zur Spezifikation eines Layouts (Seitenbeschreibung) umfassen, sind HTML, XML, TeX/LaTeX und so weiter. Die Verwendung derartiger Metaformate hat den Vorteil, dass mit der insoweit möglichen Seitenbeschreibung relativ komplexe Layouts gestaltet werden und bereits in der Metaformat-Vorlage zur weiteren Verwendung vorgehalten werden können, so dass ein Automatisierungsgerät auf Basis dieser Vorlage ein Metaformat-Dokument generieren und ohne großen Verarbeitungsaufwand in dieses Metaformat-Dokument jeweils auszugebende Daten eintragen kann. Die Verarbeitung des so generierten Metaformat-Dokuments, d. h. die tatsächlich Umsetzung in Steuerbefehle für die jeweilige Ausgabeeinheit, übernimmt diese selbsttätig im Rahmen der Interpretation des jeweiligen Metaformats.

Bevorzugt ist vorgesehen, dass das Metaformat-Dokument oder bereits die zugrunde liegende Metaformat-Vorlage zum Ergänzen um Protokolldaten Platzhalter umfasst. Wenn solche Platzhalter vorgesehen sind, kann auch die Position, Formatierung usw. einzelner Protokolldaten individuell vorgegeben werden. Dies ermöglicht einerseits eine übersichtlich strukturierte Ausgabe und schafft andererseits die Möglichkeit, einzelne Protokolldaten, z. B. durch eine spezielle Formatierung, hervorzuheben, so dass z. B. bei einem Dosierprozess einzelne verwogene Massen nach Art einer Tabelle untereinander positioniert werden können, wobei eine resultierende Gesamtmenge durch spezielle Formatierung, z. B. Fettdruck und/oder Unterstreichen, hervorgehoben ist.

Besonders bevorzugt ist vorgesehen, dass das Metaformat-Dokument als Platzhalter Bezeichner, insbesondere Klartextbezeichner umfasst, und dass das Ergänzen des Metaformat-Dokuments um Protokolldaten für jedes einzutragende Protokolldatum das Auffinden zumindest eines jeweils zugeordneten Bezeichners in dem Metaformat-Dokument und dessen Ersetzung um das jeweilige Protokolldatum erfasst. Die Verwendung von Platzhaltern erweitert die Flexibilität bei der Verwendung von Metaformat-Vorlagen oder -dokumenten nochmals erheblich. Einzelne Protokolldaten können auf diese Art z. B. auf einfache Art und Weise mehrfach in das jeweilige Metaformat-Dokument übernommen werden, während ansonsten z. B. ein zuerst an ein Metaformat-Dokument übermitteltes Protokolldatum an die Stelle eines ersten Platzhalters eingetragen wird, ein danach übermitteltes Protokolldatum an die Stelle eines zweiten Platzhalters und so weiter. Mit der Verwendung von Bezeichnern entfällt also z. B. die Notwendigkeit, die einzelnen Protokolldaten in einer bestimmten Reihenfolge an das Metaformat-Dokument zu übergeben, und die Eintragung der einzelnen Protokolldaten an der jeweils vorgesehenen Stelle im Metaformat-Dokument ist durch Verwendung und Überprüfung der jeweils vorgesehenen Bezeichner sichergestellt. Zudem erhöht sich bei der Verwendung derartiger Bezeichner die Sicherheit bei der Erstellung der Metaformat-Vorlage und die Wartbarkeit der für das Automatisierungsgerät vorgesehenen Software, mit der das Eintragen der Protokolldaten in das Metaformat-Dokument erfolgt, weil mit der Übergabe z. B. einer Variablen, die eine verwogene Sandmenge repräsentiert, an das Metaformat-Dokument sichergestellt ist, dass der Wert dieser Variablen in dem Metaformat-Dokument an der dafür vorgesehenen Stelle erscheint, wenn ein in dieser Hinsicht aussagefähiger Bezeichner verwendet wird, z. B. "#Sand". Für die Metaformat-Vorlage ist deren Erstellung übersichtlicher, wenn als Platzhalter gleiche oder ähnliche Bezeichner verwendet werden, so dass z. B. neben einem zur Erläuterung auszugebenden Text der Bezeichner für den jeweils auszugebenden Aktualwert angegeben ist.

Die o. g. Aufgabe wird ebenfalls mit einem Automatisierungsgerät mit den Merkmalen des unabhängigen Vorrichtungsanspruchs gelöst. Dazu sind bei einem Automatisierungsgerät in einer Ausführung als eingebettetes Gerät, das einen Speicher und ein darin zur Implementierung einer Automatisierungslösung vorgehaltenes Steuerungsprogramm umfasst, welches im Betrieb des Automatisierungsgerätes Protokolldaten generiert oder empfängt, Mittel zum Ausführen des Verfahrens wie hier und im Folgenden beschrieben, vorgesehen. Das erfindungsgemäße Verfahren ist bevorzugt in Software implementiert, so dass die Erfindung insoweit auch ein Computerprogramm mit Programmcodemitteln zur Implementierung der einzelnen Verfahrensschritte und ein Automatisierungsgerät oder einen Datenträger mit einem derartigen Computerprogramm umfasst..

Als Mittel zum Ausführen des Verfahrens, also insbesondere als Bestandteile des Computerprogramms, sind bevorzugt eine Funktionalität zum Erzeugen eines Metaformat-Dokuments aus der Metaformat-Vorlage und zum Transfer des erzeugten Metaformat-Dokuments in den Speicher, eine Funktionalität zum Auffinden von Platzhaltern in dem erzeugten Metaformat-Dokument und zum Ersetzen aufgefundener Platzhalter durch einzelne Protokolldaten und schließlich eine Funktionalität zum Weiterleiten des um Protokolldaten ergänzten Metaformat-Dokuments an die externe Ausgabeeinheit vorgesehen. Bei einer Implementierung des erfindungsgemäßen Verfahrens in Software sind die vorgenannten Funktionalitäten Blöcke oder Abschnitte des Steuerungsprogramms oder Untereinheiten innerhalb solcher Strukturen, z. B. bei einer Implementierung mittels einer so genannten prozeduralen Programmiersprache, Prozeduren, Funktionen oder ähnliches. Bei der Funktionalität zum Auffinden und Ersetzen von Platzhaltern handelt es sich bevorzugt um eine für die Zerlegung und Umwandlung einer beliebigen Eingabe, also des Metaformat-Dokuments, in ein für eine Weiterverarbeitung brauchbares Format vorgesehene Funktionalität, also einen so genannten Präprozessor. Ein Präprozessor ist nach allgemeinem Verständnis ein Computerprogramm, welches einen Eingabetext konvertiert und ein dabei erhaltenes Ergebnis ausgibt. Der Eingabetext ist hier das Metaformat-Dokument, und die Konvertierung bezieht sich auf das Ersetzen von Platzhaltern durch Protokolldaten. Das auszugebende Ergebnis ist also das um Protokolldaten ergänzte Metaformat-Dokument, das an die jeweilige externe Ausgabeeinheit weitergeleitet wird.

Schließlich betrifft die Erfindung auch ein Automatisierungssystem mit einem Automatisierungsgerät der hier beschriebenen Art und einem Konfigurationssystem, wobei mit dem Konfigurationssystem, insbesondere einer dort vorgehaltenen Konfigurationssoftware die Metaformat-Vorlage generierbar und an das Automatisierungsgerät transferierbar ist. Mit der Verwendung eines separaten Konfigurationssystems entfällt die Notwendigkeit, für die Generierung von Metaformat-Vorlagen auf dem Automatisierungsgerät Ressourcen vorzuhalten oder zu verwenden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen und/oder Materialien, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungssystem mit einem erfindungsgemäßen Automatisierungsgerät,
- FIG 2: ein Beispiel für eine von dem Automatisierungsgerät gemäß dem Ansatz der Erfindung verwendete Metaformat-Vorlage,
- FIG 3: einen Pseudocode als Beispiel für eine Verwendung eines aus einer Metaformat-Vorlage gewonnenen Metaformat-Dokuments und
- FIG 4: eine formatierte Ausgabe eines Metaformat-Dokuments.

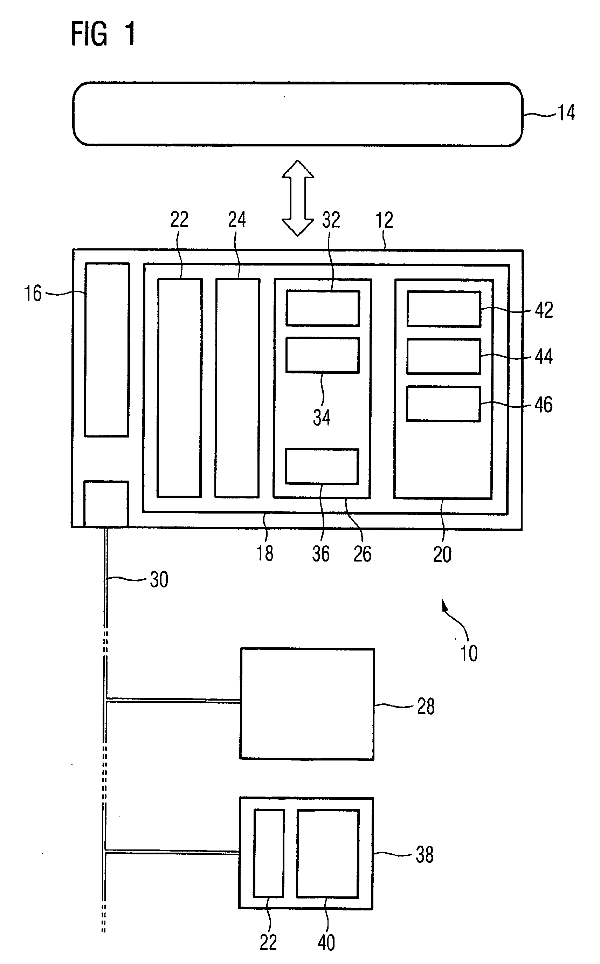

FIG 1 zeigt ein insgesamt mit 10 bezeichnetes Automatisierungssystem, das zumindest ein als eingebettet (embedded) ausgeführtes Automatisierungsgerät 12 umfasst. Das Automatisierungsgerät 12 ist zur Steuerung und/oder Überwachung eines technischen Prozesses 14 oder eines Teilprozesses davon vorgesehen. Das Automatisierungsgerät 12 umfasst in an sich bekannter Art und Weise eine Verarbeitungseinheit 16 nach Art eines Prozessors und einen Speicher 18. In dem Speicher 18 wird zur Implementierung einer Automatisierungslösung für den technischen Prozess 14 ein Steuerungsprogramm 20 vorgehalten. Dieses empfängt oder generiert im Zusammenhang mit der Steuerung des technischen Prozesses 14 Daten, die im Folgenden zusammenfassend als Protokolldaten 22 bezeichnet werden.

Im Speicher 18 wird auch eine Metaformat-Vorlage 24 vorgehalten, aus der im Betrieb des Automatisierungsgerätes 12 ein Metaformat-Dokument 26 gewonnen wird, und in das die oder einzelne Protokolldaten 22 eingetragen werden. Das um Protokolldaten 22 ergänzte Metaformat-Dokument 26 kann dann zu durch das Steuerungsprogramm 20 vorgegebenen Zeitpunkten an eine externe Ausgabeeinheit 28, z. B. einen Drucker, weitergeleitet werden. Die Ausgabeeinheit 28 ist eine metaformat-fähige Ausgabeeinheit, so dass diese das jeweilige Metaformat direkt interpretieren kann, ohne dass von dem Metaformat etwa umfasste Formatierungsanweisungen und dergleichen auf Seiten des Automatisierungsgerätes 12 umzuwandeln wären. Die Ausgabeeinheit 28 ist entweder direkt oder indirekt, z. B. über einen Bus 30, an das Automatisierungsgerät 12 angeschlossen.

In FIG 1 ist gezeigt, dass das Metaformat-Dokument 26 zum Ergänzen um Protokolldaten 22 Platzhalter 32, 34, 36 umfasst. Normalerweise sind die Platzhalter 32-36 bereits von der Metaformat-Vorlage 24 umfasst, so dass jedes aus der oder einer Metaformat-Vorlage 24 gewonnene Metaformat-Dokument 26 dieselben Platzhalter 32-36 umfasst. Für die Umsetzung der Erfindung spielt es keine Rolle, ob das Eintragen einzelner Protokolldaten 22 in ein aus der Metaformat-Vorlage 24 gewonnenes Metaformat-Dokument 26, dadurch erreicht wird, dass zunächst eine Kopie der Metaformat-Vorlage 24 als Metaformat-Dokument 26 erstellt wird und die Protokolldaten 22 an die Stelle von vom Metaformat-Dokument 26 umfassten Platzhaltern 32-36 eingetragen werden oder ob das Generieren eines Metaformat-Dokument 26 aus der Metaformat-Vorlage 24 quasi gleichzeitig mit dem Eintragen einzelner Protokolldaten 22 in das Metaformat-Dokument 26 und zwar an Positionen, die in der Metaformat-Vorlage 24 durch die Platzhalter vorgegeben werden, erfolgt. Beide Lösungen sind gleichwertig und auch wenn hier oder im Weiteren bei der Beschreibung auf eine der beiden Lösungsvariante Bezug genommen sind, soll die korrespondierende Lösungsvariante als jeweils mit umfasst gelten.

Das Konfigurationssystem 38 ist genau wie die Ausgabeeinheit 26 Bestandteil des Automatisierungssystems 10 und mit diesen und weiteren von dem Automatisierungssystem 10 umfassten Geräten kommunikativ, z. B. über den Bus 30, verbunden. Das Konfigurationssystem 38, ein Gerät mit einer Funktionalität nach Art eines so genannten Personalcomputers oder dergleichen, umfasst in an sich bekannter Art und Weise einen Prozessor und einen Speicher (nicht dargestellt), und in dem Speicher ist eine Konfigurationssoftware 40 vorgehalten. Mit dieser Konfigurationssoftware 40 ist die Metaformat-Vorlage 22 generierbar und an das Automatisierungsgerät 12 transferierbar. Wenn von dem Automatisierungssystem 10 mehrere Automatisierungsgeräte 12 umfasst sind, kann jedem Automatisierungsgerät 12 eine eigene Metaformat-Vorlage 22 zugespielt werden. Genauso können dem oder jedem Automatisierungsgerät 12 mehrere Metaformat-Vorlagen 22 zugespielt werden.

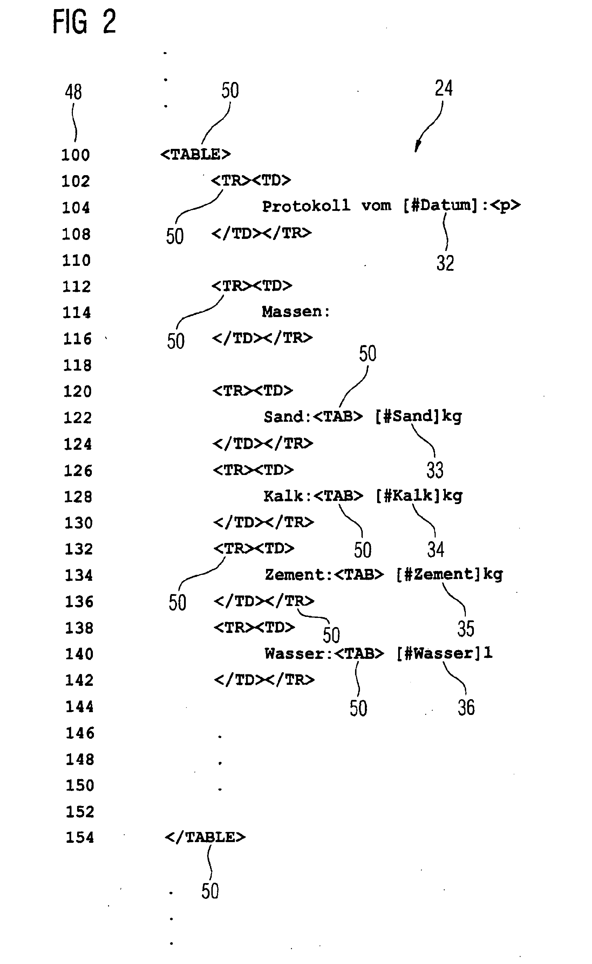

Zur Verwendung der Metaformat-Vorlage 22 und des Metaformat-Dokuments 26 umfasst das Automatisierungsgerät 12 - in der dargestellten Ausführungsform als Bestandteil des Steuerungsprogramms 20 - eine erste, zweite und dritte Funktionalität 42, 44, 46. Die erste Funktionalität 42 ist zum Erzeugen eines Metaformat-Dokuments 26 aus der Metaformat-Vorlage 22 und zum Transfer des erzeugten Metaformat-Dokuments 26 in den Speicher 18 vorgesehen. Die zweite Funktionalität 44 ist zum Auffinden von Platzhaltern 32-36 in dem erzeugten Metaformat-Dokument 26 und zum Ersetzen aufgefundener Platzhalter 32-36 durch einzelne Protokolldaten 22 vorgesehen. Die dritte Funktionalität 46 ist zum Weiterleiten des um Protokolldaten 22 ergänzten Metaformat-Dokuments 26 an die externe Ausgabeeinheit 28 vorgesehen. Erste, zweite und dritte Funktionalität 42-46 sind bei einer Ausführung als Bestandteile des Steuerungsprogramms 20 Teile in dem Steuerungsprogramm 20 zur Implementierung der beschriebenen Verfahrensschritte, also z. B. so genannte Unterprogramme. Die zweite Funktionalität 44 zum Auffinden und Ersetzen von Platzhaltern 32-36 ist dabei z. B. ein so genannter Präprozessor, der in dem Metaformat-Dokument 26 an die Stelle einzelner Platzhalter 32-36 Aktualdaten aus den Protokolldaten 22 einträgt. Weitere Details in dieser Hinsicht werden mit Bezug auf FIG 2 erläutert.

FIG 2 zeigt ein Beispiel für eine Metaformat-Vorlage 24, wobei sich das gezeigte Metaformat auf die unter dem Kürzel HTML bekannte, so genannte Hypertextauszeichnungssprache (Hypertext Markup Language) anlehnt. Nur zur Referenzierung sind für den in FIG 2 dargestellten Ausschnitt aus der Metaformat-Vorlage 24 Zeilennummern 48 gezeigt. Die Metaformat-Vorlage 24 umfasst Formatierungsanweisungen 50, wobei mit den dargestellten Formatierungsanweisungen 50 eine Formatierung in einer tabellarischen Form erreicht werden soll und wobei die Tabelle eine Mehrzahl von Zeilen umfasst. Die Formatierungsanweisungen 50 in dem Metaformat sind ein Beispiel dafür, wie dem Automatisierungsgerät 12 ressourcenintensive Formatierungen einer Ausgabe abgenommen werden. Das Metaformat wird auf Seiten der Ausgabeeinheit 28 interpretiert, und das Automatisierungsgerät 12 ist von den Einzelheiten der jeweiligen Formatierung, hier also der tabellarischen Darstellung einzelner Protokolldaten 22, komplett entlastet.

Für die Darstellung spezieller Protokolldaten 22 an dafür vorgesehene Positionen der zu generierenden Ausgabe umfasst die Metaformat-Vorlage 24 Platzhalter 32-36 (Zeilen 104, 122, 128, 134 und 140). Die Platzhalter 32-36 sind in der Metaformat-Vorlage 24 aufgrund einer speziellen Syntax, hier durch eckige Klammern und ein vorangestelltes #-Zeichen, kenntlich. Im Betrieb des Automatisierungsgerätes 12 werden diese Platzhalter 32-36, nachdem aus der Metaformat-Vorlage 24 ein Metaformat-Dokument 26 generiert wurde (im einfachsten Fall durch Erstellen einer Kopie der Metaformat-Vorlage 24), mit der zweiten Funktionalität 44 gesucht und durch die entsprechenden Protokolldaten 22 ersetzt.

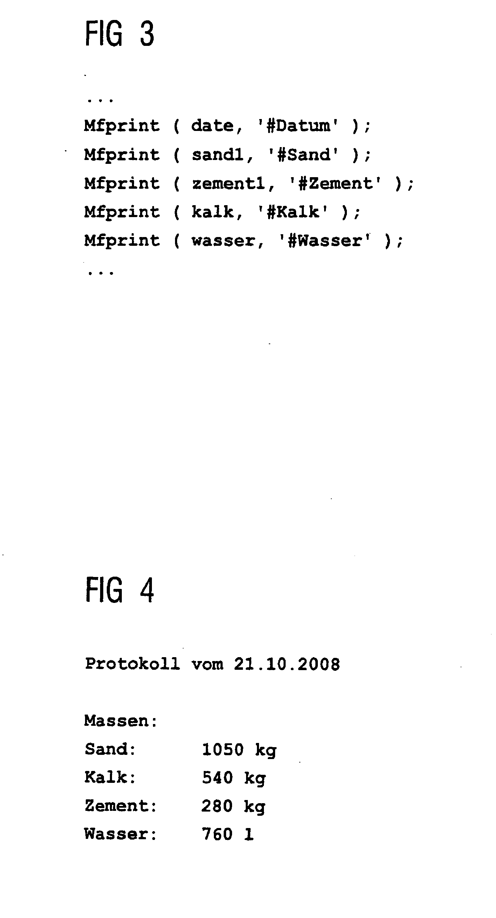

Ein Beispiel, wie das Metaformat-Dokument 26 durch das Steuerungsprogramm 20 zur Ausgabe von Protokolldaten 22 genutzt wird, ist exemplarisch vereinfacht in FIG 3 mit Pseudocodeanweisungen gezeigt. Der Bezeichner "Mfprint" soll für "Metaformat Print" stehen, und eine damit bezeichnete und auf diese Weise aufgerufene Routine entspricht im Wesentlichen der zweiten Funktionalität 44 zum Auffinden von Platzhaltern 32-36 im Metaformat-Dokument 26 und zum Ersetzen aufgefundener Platzhalter 32-36 durch einzelne Protokolldaten 22. Dies soll anhand des in FIG 3 dargestellten Beispiels näher erläutert werden. Die Routine "Mfprint" umfasst zumindest zwei Parameter, beim ersten Aufruf die Parameter "date" und "#Datum". Mit dem ersten Parameter wird der Aktualwert der Variablen "date" übergeben und mit dem zweiten Parameter wird spezifiziert, dass dieser Aktualwert im Metaformat-Dokument 26 an der Stelle der Platzhalters 32-36 mit dem Bezeichner "#Datum" einzutragen ist. Dieses Prinzip gilt für die vier weiteren, in FIG 4 dargestellten Aufrufe entsprechend, und es ist ersichtlich, dass die Reihenfolge der übergebenen Protokolldaten 22, also "date", "sandl", "zement1" usw. nicht der Reihenfolge der korrespondierenden Platzhalter 32-36 in dem Metaformat-Dokument 26 entsprechen muss, was zu einer günstigen Flexibilität und einer insoweit vorteilhaften Verwendung von Bezeichnern, insbesondere Klartextbezeichnern, als Platzhalter 32-36 führt.

In FIG 4 ist schließlich exemplarisch eine entsprechend dem Metaformat formatierte Ausgabe gezeigt, wie sie von der Ausgabeeinheit 28 erzeugt werden kann.

Damit lässt sich die Erfindung kurz wie folgt darstellen: Es werden ein Verfahren zum Betrieb eines als eingebettet ausgeführten Automatisierungsgerätes 12 mit einem Speicher 18 und einem darin zur Implementierung einer Automatisierungslösung vorgehaltenen Steuerungsprogramm 20, welches Protokolldaten 22 generiert oder empfängt, und ein nach dem Verfahren arbeitendes Automatisierungsgerät 12 angegeben, bei dem im Speicher 18 eine Metaformat-Vorlage 24 vorgehalten wird, bei dem im Betrieb einzelne Protokolldaten 22 in ein aus der Metaformat-Vorlage 24 gewonnenes Metaformat-Dokument 26 eingetragen werden und bei dem das um Protokolldaten 22 ergänzte Metaformat-Dokument 26 an eine externe Ausgabeeinheit 28, z. B. einen metaformatfähigen Drucker, weitergeleitet wird, so dass auf Seiten des Automatisierungsgerätes 12 z. B. kein Druckertreiber erforderlich ist und auf Seiten des Automatisierungsgerätes 12 keine Ressourcen für die Formatierung und Umsetzung in Steuerungsanweisungen für die Ausgabeeinheit 28 benötigt werden.

## Patentansprüche

1. Verfahren zum Betrieb eines als eingebettet ausgeführten Automatisierungsgeräts (12) mit einem Speicher (18) und einem darin zur Implementierung einer Automatisierungslösung vorgehaltenen Steuerungsprogramm (20), das Protokolldaten (22) generiert oder empfängt,
**dadurch gekennzeichnet,**
**dass** im Speicher (18) eine Metaformat-Vorlage (24) vorgehalten wird,
**dass** im Betrieb einzelne Protokolldaten (22) in ein aus der Metaformat-Vorlage (24) gewonnenes Metaformat-Dokument (26) eingetragen werden und
**dass** das um Protokolldaten (22) ergänzte Metaformat-Dokument (26) an eine externe Ausgabeeinheit (28) weitergeleitet wird.

2. Verfahren nach Anspruch 1,
wobei die Ausgabeeinheit (28) ein metaformatfähiger Drucker ist.

3. Verfahren nach Anspruch 1 oder 2,
wobei das Metaformat-Dokument (26) oder bereits die zugrunde liegende Metaformat-Vorlage (24) zum Ergänzen um Protokolldaten (22) Platzhalter (32, 34, 36) umfasst.

4. Verfahren nach Anspruch 3,
wobei das Metaformat-Dokument (26) als Platzhalter (32-36) Bezeichner, insbesondere Klartextbezeichner, umfasst und
wobei das Ergänzen des Metaformat-Dokuments (26) um Protokolldaten (22) für jedes einzutragende Protokolldatum das Auffinden zumindest eines jeweils zugeordneten Bezeichners in dem Metaformat-Dokument (26) und dessen Ersetzung um das jeweilige Protokolldatum umfasst.

5. Automatisierungsgerät in einer Ausführung als eingebettetes Gerät, mit einem Speicher (18) und einem darin zur Implementierung einer Automatisierungslösung vorgehaltenen Steuerungsprogramm (20), das im Betrieb des Automatisierungsgeräts (12) Protokolldaten (22) generiert oder empfängt, mit Mitteln zum Ausführen des Verfahrens nach einem der vorangehenden Ansprüche.

6. Automatisierungsgerät nach Anspruch 5, mit
einer Funktionalität (42) zum Erzeugen eines Metaformat-Dokuments (26) aus der Metaformat-Vorlage (24) und zum Transfer des erzeugten Metaformat-Dokuments (26) in den Speicher (18),
einer Funktionalität (44) zum Auffinden von Platzhaltern (32-36) in dem erzeugten Metaformat-Dokument (26) und zum Ersetzen aufgefundener Platzhalter (32-36) durch einzelne Protokolldaten (22) und
einer Funktionalität (46) zum Weiterleiten des um Protokolldaten (22) ergänzten Metaformat-Dokuments (26) an die externe Ausgabeeinheit (28)
als Mittel zum Ausführen des Verfahrens nach einem der Ansprüche 1 bis 5.

7. Automatisierungsgerät nach Anspruch 6, mit einem Präprozessor als Funktionalität zum Auffinden und Ersetzen von Platzhaltern (32-36).

8. Computerprogramm zur Ausführung eines Verfahrens gemäß einem der Ansprüche 1 bis 5.

9. Datenträger mit einem Computerprogramm nach Anspruch 8.

10. Automatisierungsgerät nach einem der Ansprüche 5 bis 7, auf dem ein Computerprogramm nach Anspruch 8 geladen ist.

11. Automatisierungssystem mit einem Automatisierungsgerät (12) nach einem der Ansprüche 5 bis 7 oder 10 und einem Konfigurationssystem (38),
wobei mit dem Konfigurationssystem (38), insbesondere mit einer dort vorgehaltenen Konfigurationssoftware (40), die Metaformat-Vorlage (24) generierbar und an das Automatisierungsgerät (12) transferierbar ist.
